# EUROPEAN PATENT SPECIFICATION

(11) **EP 3 137 341 B1**
(45) Date of publication and mention of the grant of the patent: **27.06.2018**
(21) Application number: 15718242.9
(22) Date of filing: 28.04.2015
(51) Int. Cl.: B60R 16/02, H01R 13/74, H01R 13/52

(54) **FIXING AND SEALING SYSTEM FOR DOOR CONNECTOR**
BEFESTIGUNG UND DICHTUNGSSYSTEM FÜR TÜRVERBINDER
SYSTÈME D'ÉTANCHÉITÉ ET DE FIXATION DE CONNECTEUR DE PORTE

(30) Priority: 29.04.2014 EP 14166425
(43) Date of publication of application: 08.03.2017
(73) Proprietor: Delphi Technologies, Inc., Troy, MI 48007 (US)
(72) Inventor: GRUDZEWSKI, Michal, PL-31-515 Krakow (PL); NAJDUCH, Piotr, PL-33-300 Nowy Sacz (PL)
(74) Representative: Robert, Vincent
(86) International application number: PCT/EP2015/059234
(87) International publication number: WO 2015/165917

(56) References cited:
- EP-A2- 1 914 847
- WO-A1-01/89044
- WO-A1-02/47212
- WO-A1-2005/101583
- WO-A1-2007/095975
- CN-U- 202 585 982
- DE-A1-102010 040 500
- DE-B3-102005 004 583
- JP-A- 2011 222 224
- US-A- 5 328 388
- US-A- 5 775 944
- US-A1- 2004 242 063

## Description

### Field of the invention

The invention relates to a connector assembly to be mounted through an opening in a panel, in particular to a door connection assembly of a passenger vehicle.

### Technical Background

Modern passenger cars include a number of electric devices, which are comprised in the door assembly, such as electric window openers, side airbags, loud speakers, switches for the electrical adjustment of passenger seats, sensors to activate the interior lights of the vehicle upon opening of the door, actuating devices, means to adjust the rear view mirrors, etc. All or most of the electrical systems incorporated in the door assembly are controlled and powered by control systems which are accommodated somewhere in for example the engine compartment of the vehicle. Therefore, it is necessary to connect the electric devices of the door assembly with the control means and power supply located somewhere in the main body of the vehicle. Since the door assembly is movable with regard to the body of the vehicle, the connection has to be flexible and is usually realized in the form of a cable bundle. For manufacturing reasons this cable bundle usually extends through a panel of the door assembly and is provided on its free end with an electrical connector. The counter-connector is provided with another cable bundle which connects the counter-connector with the control system and power supply of the vehicle. During assembly of the vehicle the counter-connector is mounted through an opening in the panel of an A-pillar or B-pillar of the vehicle such that the connector can be coupled with the counter-connector through this opening in the panel. The assembly of the counter-connector to the pillar is usually done from inside the pillar. Due to vibrations occurring during operation of the vehicle the counter-connector has to be fixed to the pass-through hole in the pillar. Additionally, the work environment of the connectors requires that the pillar connector is sufficiently sealed against moisture and/or dust and similar. It is therefore necessary to seal the connection between connector and counter-connector, preferably at the opening in the panel of the A-pillar or B-pillar of the vehicle.

Traditional sealed fixation systems make use of screws to fix the counter-connector, or pillar connector, to the pass-through mounting hole. However, the assembly of such systems is more complicated due to the use of screws and since more parts need to be handled during the assembly operation. In addition, the use of screws make additional holes in the pillar necessary, which then also need to be sealed.

United State Patent 5,775,944 discloses a sealed connector-to-body interface, in which an electrical connector including a housing having a shoulder proximate to one end thereof is affixed to a planar body surface and a grommet mounted to the connector extending away from the planar body surface. An annular lip seal of the grommet is compressed between the shoulder and a first side of the planar body surface facing the shoulder. The seal is completely unprotected from outside mechanical influences and can thus easily be damaged. Further, the grommet has a relatively complex shape.

In the International Patent Application WO 01/89044 A1 a connector used for interconnecting wire harness at the door portion of an automobile is described. It is thereby suggested to insert a first connector from an inner side of the vehicle member into a connector fixing hole and to partially penetrate the connector fixing hole to an outer side of the vehicle member, to rotate the first connector while the first connector is located in the connector fixing hole, and eventually to couple the first connector with a second connector. However, the construction disclosed in this document has the same drawbacks as the US 5,775,944.

It is an object of the present invention to provide a connector assembly that is intended to be mounted through an opening in a panel, in particular for a door connection system of a passenger vehicle, which reduces or minimizes the above described problems and disadvantages. It is in particular an object of the present invention to provide a connector assembly which is simple to mount. It is a further object to provide a connector assembly which can preferably be fixed without the use of screws. A further object of the present invention is to provide a connector assembly with an improved sealing function.

These and other objects, which become apparent by reading the following description, are achieved by a connector assembly according to the subject matter of claim 1.

### Summary of the invention

According to the invention a connector assembly is provided, which is to be mounted through an opening in a panel, in particular through a pass-through hole of a panel of a door or of the body of a vehicle (i.e. passenger car). In particular, the connector assembly is designed to be mounted through a pass-through hole in an A- or B-pillar of a passenger car.

The connector assembly comprises a connector housing with integrally formed locking means, which are adapted to lock the connector housing onto the circumferential walls of the opening of the panel. Any suitable integrally formed locking means may be utilized to lock or attach the connector housing to the panel, however, preferably latching elements are utilized that allow a simple snap-fit mounting of the housing to the panel, respectively panel opening. The connector housing may comprise a mating face which is adapted to extend through the opening of the panel when the connector housing is mounted from one side to the panel. The connector assembly furthermore comprises an open sealing frame, which is adapted to be mounted to the connector housing such that the connector housing extends through the open sealing frame. In other words, the frame, which is preferably a simple rectangular frame, is designed to encircle the connector housing. The sealing frame thereby includes a sealing member, which has at least two sealing surfaces. One of these sealing surfaces is in sealing contact with an outer wall of the connector housing and the other sealing surface is in sealing contact with the panel, when the connector housing is mounted to said panel and the sealing frame is attached to the connector housing. Thereby a complete sealing of the pass-through mounting hole is provided. The sealing frame is made of a first material, which is different from the material of which the sealing member is made up of. Preferably, the sealing frame is made of a more rigid material than the sealing member, such that the sealing frame can support and protect the sealing member, thereby advantageously providing an improved sealing reliability, while at the same time offering a particular simple mounting operation.

The term housing as used herein denotes any kind of component mountable to the panel. If the panel is for example a part of a pillar of a vehicle, the connector housing can for example be mounted from the "interior" side, or inner side, of the panel. The sealing frame is preferably pre-assembled to the connector housing, prior to mounting said connector housing to the panel. Preferably, the open sealing frame is an essentially rectangular frame having four side walls, such that the sealing frame preferably receives the connector housing when mounted thereon.

The connector assembly of the present invention allows for reduced cost, since a smaller amount of parts is necessary and the connector assembly allows for a simplified assembly process to the panel. In addition, an improved sealing reliability is achieved.

Preferably, the sealing frame comprises latching means such that the sealing frame can be latched to the connector housing. The latching means may for example be latching hooks or correspondingly latching surfaces. When latched to the connector housing, the latching means fix the sealing frame to said connector housing. Accordingly, the sealing frame can easily be attached to the connector housing without the use of screws.

Preferably the connector assembly may further comprise a secondary locking slider, which may preferably be provided on the connector housing from the outer side of the panel. The secondary locking slider provides an additional fixation of the housing to the panel, i.e. in addition to the locking means of the housing, which can also be denoted as primary locking means. To this end, the connector housing may preferably comprise guide grooves adapted to receive the secondary locking slider. In one example, when the connector housing is mounted to the panel, the locking slider may be provided in the guide grooves of the connector housing, thereby securing the connector housing to the panel and maximizing retention of the connector assembly.

In a preferred embodiment of the present invention, the sealing member of the open sealing frame comprises at least one sealing ring, more preferably two or more rings. The rings may be separate elements or they may form separate portions of one part. The skilled person will understand that the expression "ring" used in this context does not necessarily mean circular rings but can also denote to any other suitable shape. In particular, for most modern door connector applications, the rings have an essentially rectangular shape in accordance with the essentially rectangular cross-section of modern door connector housings. The sealing member is preferably arranged completely on interior sides of the open sealing frame and is thus protected by the more rigid frame. As mentioned above, the sealing member is further preferably in contact with both the connector housing and the panel.

The connector assembly described herein is particularly useful for door connection systems of modern vehicles, wherein a connection between a vehicle body and a vehicle door has to be made.

### Description of preferred embodiments

In the following the invention is described exemplarily with reference to the enclosed figures.
Fig. 1 is a schematic illustration of a connector assembly according to the present invention.
Fig. 2 shows an open sealing frame according to the present invention.
Fig. 3 shows the connector assembly of fig. 1 from a different perspective.
Fig. 4 is a schematic illustration of the connector assembly of fig. 1 prior to the mounting of the connector assembly onto a panel.
Fig. 5 is a schematic illustration of the connector assembly of fig. 1 mounted to a panel.
Fig. 6 shows a three-dimensional cross section of fig. 5.
Fig. 7 shows the cross section of fig. 6 in a two-dimensional view.
Fig. 8 shows the assembly of fig. 5 with an additional secondary locking slider.
Fig. 9 is a schematic illustration of the secondary locking slider of fig. 8.
Fig. 10 shows a three-dimensional cross section of the assembly of fig. 8.
Fig. 11 shows a three-dimensional cross section of another exemplary open sealing frame according to the present invention.

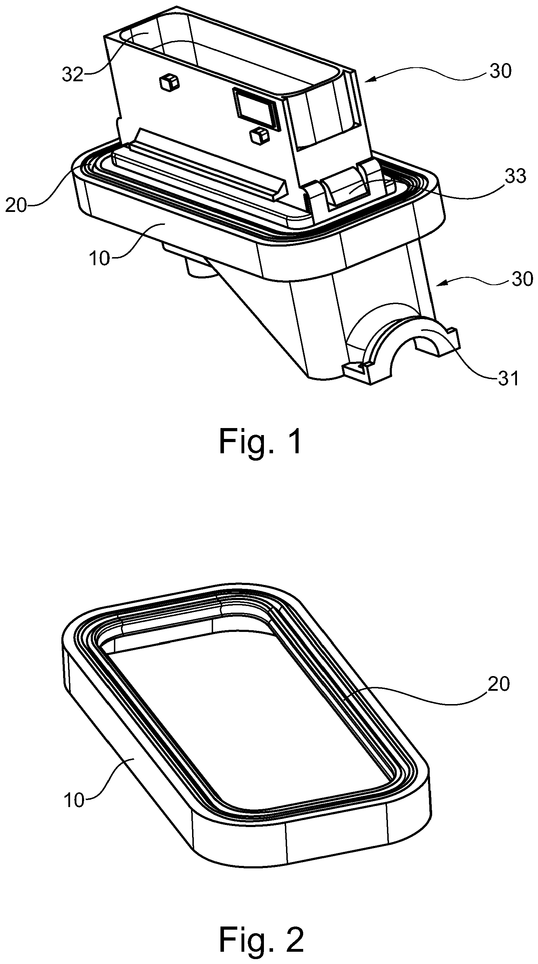

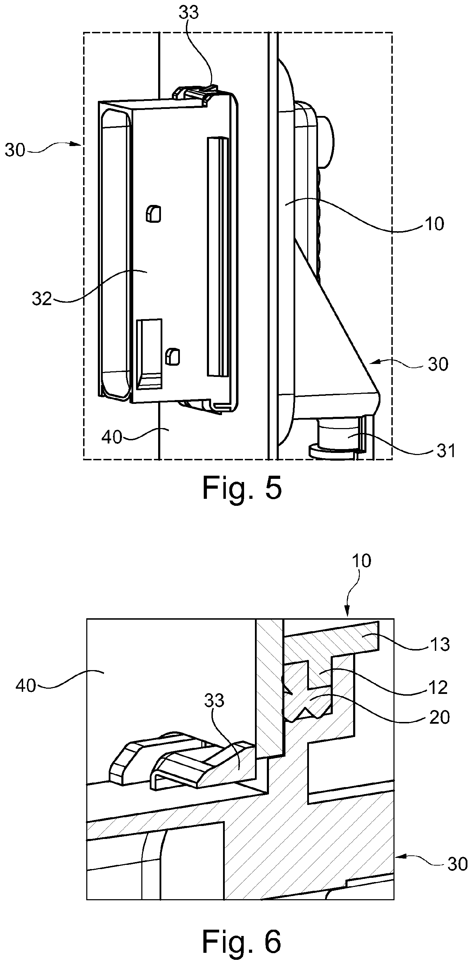

Fig. 1 shows a connector assembly comprising a connector housing 30, which preferably comprises a wire shroud 31 and a mating face 32. When mounted to a panel of a door or body of a vehicle (see e.g. fig. 5), the mating face 32 of the connector housing 30 may be on one side of the panel, while the wire shroud 31 of the connector housing 30 is on the other side of the panel. Connector housing 30 comprises locking means 33, which are adapted to lock the connector housing 30 to the panel. In addition, an open sealing frame 10 is shown in fig. 1 being attached to the connector housing 30. The open sealing frame 10 includes a sealing member 20, which is in contact with the connector housing 30 in the shown arrangement, i.e. when the sealing frame 10 is attached to the housing 30. Thereby a, preferably water-tight, seal between the connector housing 30 and the sealing frame 10 is provided. The connector housing 30 and the sealing frame 10 are preferably injection-molded plastic parts. According to the invention, the material for the sealing member 20 is different than the material used for the frame 10 and is preferably silicon and/or rubber. The sealing member 20 can e.g. be attached to the frame 10 by form-fitting connection or by gluing or similar. However, preferably, the sealing frame 10 and the sealing member 20 are prepared by a two-component molding process, where different materials are used in the molding process for frame and sealing member. In particular, and generally preferred, the material for the frame 10 should provide the frame 10 with a high degree of rigidity to facilitate the mounting of the frame 10 to the connector housing 30 and such that the frame 10 can serve as protection for the sealing member 20 from e.g. outside mechanical damages. The material for the sealing member 20 (which can be one or more parts) is relatively soft and elastic to provide a good sealing function.

Fig. 2 shows the open sealing frame 10 of fig. 1. It is generally preferred that the open sealing frame 10 is an essentially rectangular frame having four side walls as shown in fig. 2. The open sealing frame 10 further includes the sealing member 20, which is as illustrated preferably arranged completely on interior sides of the walls of the open sealing frame 10 and is thus protected by the frame walls. The open sealing frame 10 may be of any other favorable form comprising an opening to retrieve the connector housing 30. However, generally preferred, the sealing frame 10 consists of an essentially rectangular frame having four side walls as shown. It is generally preferred that the sealing member 20 of the open sealing frame 10 comprises a sealing ring as shown in fig. 2. Here, the ring has an essentially rectangular shape in accordance with the essentially rectangular cross-section of modern door connector housing.

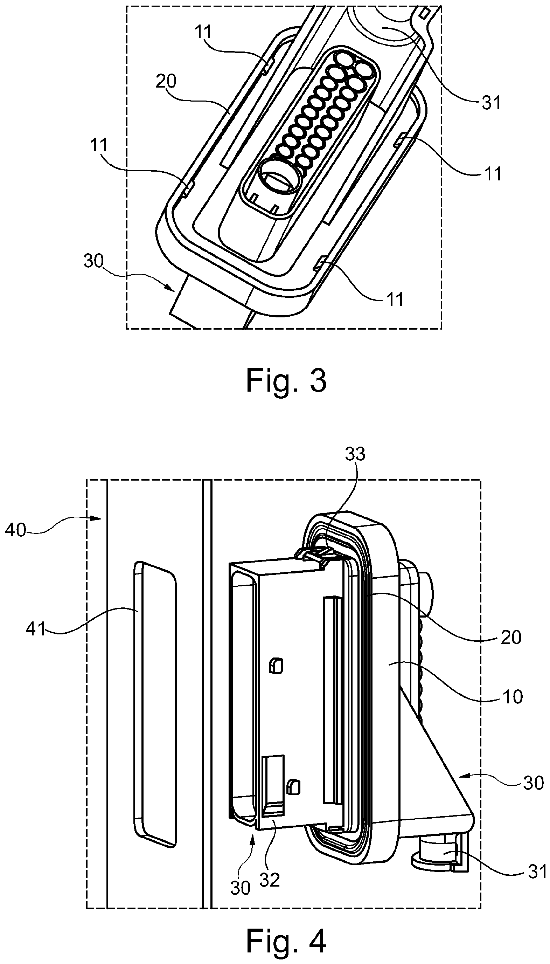

Fig. 3 shows the same connector assembly of figure 1 from a different perspective. The sealing frame 10 comprises several latching means, preferably in the form of latching hooks 11 as shown. Said latching hooks 11 fix the sealing frame 10 to the connector housing 30 by a simple snap-fit mounting. The number of latching elements 11 is not critical and also other fastening means are equally possible to attach the sealing frame 10 to the connector housing 30.

Fig. 4 presents a schematic view of the connector assembly before it is mounted through an opening 41 in a panel 40. The panel 40 is e.g. a part of a vehicle body, as e.g. the A- or B-pillar of a passenger car. As shown, the open sealing frame 10 including the sealing member 20 is already attached to the connector housing 30. Alternatively, it may be attached after the connector housing 30 is mounted to the panel 40. In this case, the latching means of the frame have to be arranged differently. The mating face 32 of the connector housing 30 is pushed through the opening 41 of the panel 40 (see fig. 5) until the locking elements 33 of the connector housing 30 latch behind the edges of opening 41. This fully mounted configuration is shown in fig. 5. Obviously, the number of locking elements is not critical and also other fastening means are equally possible to mount connector housing 30 to the panel 40.

Fig. 5 shows a fully mounted connector assembly according to the present invention. On one side of the panel 40 the open sealing frame 10 is latched to the connector housing 30, such that the open sealing frame 10 including the sealing member 20 provides a sealing of the opening 41. On the other side of the panel 40 the locking means 33 lock the housing 30 onto the panel 40. Accordingly, a fully mounted connector assembly comprises of a sealing frame 10 attached to the connector housing 30, which in turn is mounted through an opening 41 in the panel 40.

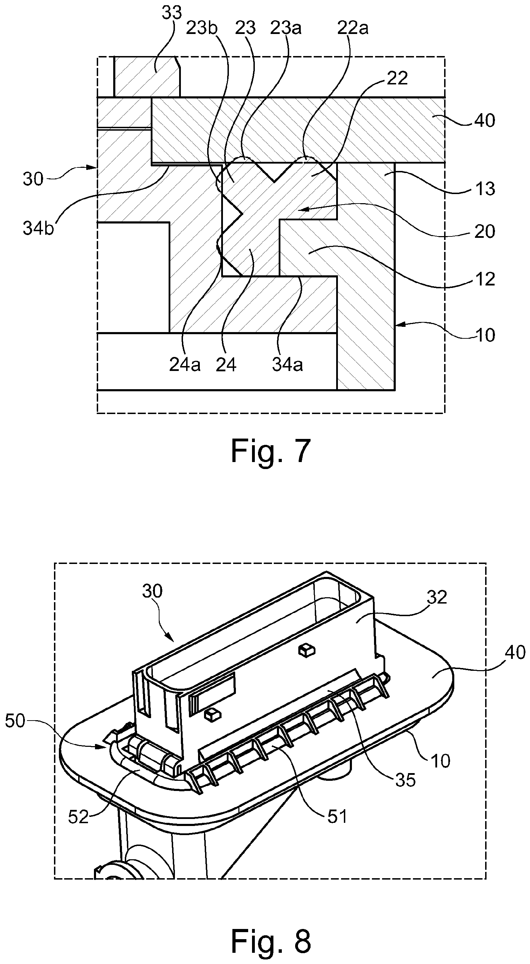

Figs. 6 and 7 show a cross section of the fully mounted connector assembly of fig. 5. The sealing member 20 has three sealing lips 22, 23, 24 each providing sealing surfaces. Sealing lip 22 is in sealing contact with panel 40 by means of sealing surface 22a. Sealing lip 23 is in sealing contact with panel 40 by means of sealing surface 23a, and is in sealing contact with connector housing 30 by means of sealing surface 23b. Sealing lip 24 is in sealing contact with connector housing 30 by means of sealing surface 24a. Thereby the sealing frame 10 is sealed to both the panel 40 and to the connector housing 30. Generally preferred, the open sealing frame 10 consists of walls with a T-shaped cross sectional profile, as shown. The web 12 of the T-shaped profile extends towards the connector housing 30, i.e. it extends inwards the open sealing frame 10. The sealing member 20 is preferably in contact with the web 12 and at least a part of the flange 13 of the open sealing frame 10. The connector housing 30 comprises surfaces 34a and 34b parallel to the panel 40 such that surface 34b is in contact with the panel 40 and the surface 34a is in contact with the sealing frame 10 when the connector assembly is fully mounted as shown in fig. 7. Thereby the surfaces 34a and 34b of the connector housing 30 support the open sealing frame 10 and press it against the panel 40 when the connector assembly is fully mounted. Thereby the sealing portion 20 is compressed assuring an improved sealing function. Fig. 7 further shows that the sealing member 20 is fully enveloped by the connector housing 30, the sealing frame 10 and the panel 40 when the connector assembly is fully mounted thereto. In other words, the connector housing 30, the sealing frame 10 and the panel 40 fully surrounds the sealing member 20.

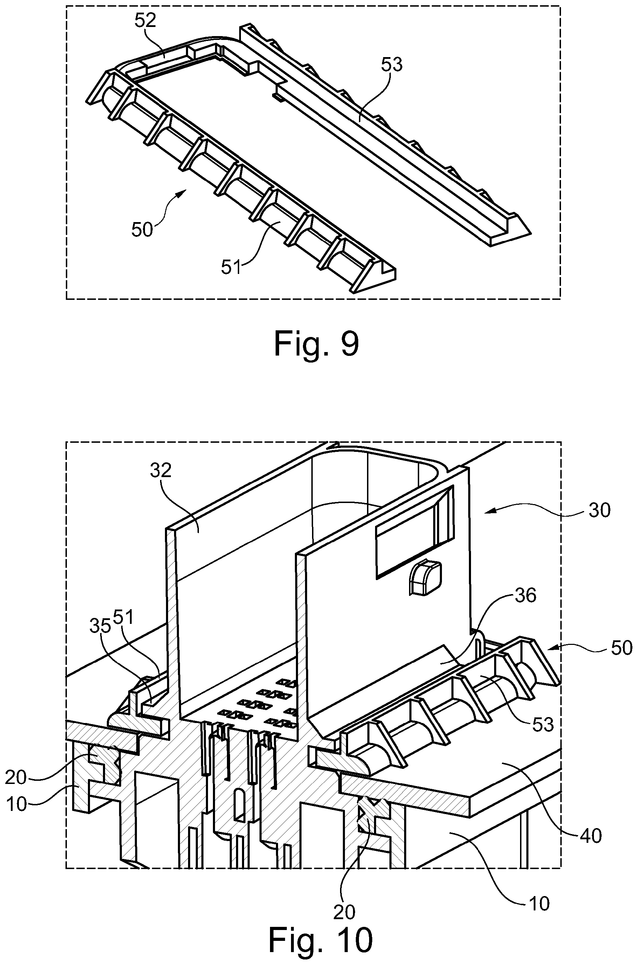

Fig. 8 shows the assembly of fig. 5 with an additional secondary locking slider 50. This secondary locking slider 50, exemplarily presented in fig. 9 in detail, has essentially a U-shape with two parallel arms 51 and 53, which are connected by a common portion 52. When provided on the connector housing 30, the secondary locking slider 50 secures the connector housing 30 to the panel 40. To this end, the connector housing 30 comprises two guide grooves 35 and 36 adapted to partially receive the arms 51 and 53 of the secondary locking slider 50. As one can see in particular from fig. 10, the arms 51, 53 are partially arranged inside the guide grooves 35, 36 and partially protrude from the guide grooves 35, 36.

Fig. 10 shows a cross section of fig. 8. The grooves 35, 36 of the connector housing 30 are provided such that the secondary locking slider 50 can be pushed into the grooves 35, 36 from the short side of connector housing 30. Since the arms 51, 53 are partially arranged inside the guide grooves 35, 36 and partially protrude from the guide grooves they can interact with the surface of panel 40 and thereby block any movement of the housing 30. Generally preferred, the grooves and the slider 50 are provided on the side of the housing that is featuring the locking means of the housing.

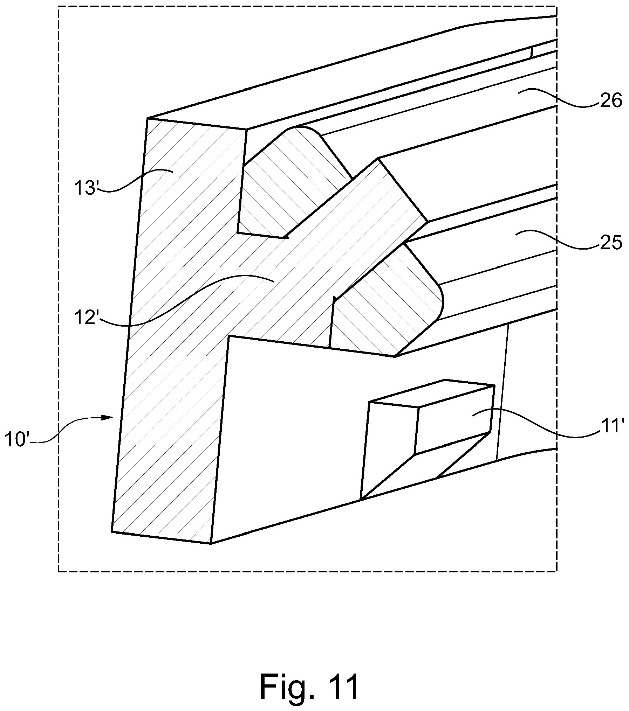

Fig. 11 shows a further example of a sealing frame 10' according to one further aspect of the present invention. The sealing frame 10' comprises a sealing member, which is provided in form of two separate sealing lips 25 and 26. Between the sealing lips 25, 26 a web 12' of the sealing frame 10' protrudes. One sealing lip is preferably further in contact with a part of the flange 13' of the sealing frame 10'. The web 12' presses the lips 25, 26 into sealing engagement in fully mounted condition of the connector assembly, thereby improving the sealing function. At the same time, the relative expansive material for the sealing member can be reduced.

## Claims

1. Connector assembly to be mounted through an opening (41) in a panel (40), in particular of a panel of a door or body of a vehicle, the assembly comprising:
a connector housing (30) with integrally formed locking means (33) adapted to lock the housing (30) onto the circumferential walls of the opening (41); **characterized in that** the assembly further comprises an open sealing frame (10, 10') adapted to be mounted to the connector housing (30) such that the connector housing (30) extends through the open frame (10, 10'), said sealing frame (10,10') includes a sealing member (20) having at least two sealing surfaces (22a, 23a, 23b, 24a), whereby one surface is in sealing contact with an outer wall of the connector housing (30) and one other surface is in sealing contact with the panel (40) when the connector assembly is mounted thereto;
and **in that** the sealing frame (10, 10') is made of a first material, whereas the sealing member (20) is made of at least a second material, different than the first material.

2. Connector assembly of claim 1, wherein the sealing member (20) is made of rubber and/or silicon.

3. Connector assembly of any one of claims 1 or 2, wherein the sealing member (20) comprises at least one sealing ring.

4. Connector assembly of any one of the preceding claims, wherein the sealing frame (10, 10') comprises latching means (11, 11') adapted to latch the sealing frame (10, 10') onto the connector housing (30), in particular wherein the latching means (11, 11') are latching hooks or corresponding latching surfaces.

5. Connector assembly of any one of the preceding claims, wherein the sealing frame (10, 10') is in contact with the panel (40) when the connector assembly is mounted through the opening (41) of the panel (40).

6. Connector assembly of any one of the preceding claims, wherein the sealing frame (10, 10') is an essentially rectangular frame having four side walls and the sealing member (20) is arranged completely on interior sides of the walls of the frame (10, 10').

7. Connector assembly of any one of the preceding claims, wherein the sealing frame (10, 10') does not extend through or into the opening (41) of the panel (40) when the connector assembly is fully mounted thereto.

8. Connector assembly of any one of the preceding claims, further comprising a secondary locking slider (50) arranged movable on the connector housing (30), from a first locked position in which the slider (50) locks the connector housing (30) in its mounted position, to a second open position.

9. Connector assembly of claim 8, wherein said secondary locking slider (50) has essentially a U-shape comprising two parallel arms (51, 53) being connected by a common portion (52), and the connector housing (30) comprises two corresponding guide grooves (35, 36) adapted to partially receive the arms (51, 53) of the secondary locking slider (50) such that the arms (51, 53) are partially arranged inside the guide grooves (35, 36) and partially protrude from the guide grooves (35, 36) when the secondary locking slider (50) is in the first locked position.

10. Connector assembly of any one of the preceding claims, wherein the sealing frame (10, 10') is an essentially rectangular frame consisting of four side walls with a T-shaped cross sectional profile, whereby the web (12, 12') of the T-shaped profile extends inwards the open sealing frame (10, 10').

11. Connector assembly of claim 10, wherein the sealing member (20) is in contact with the web (12, 12') and a part of the flange (13, 13') of the T-shaped cross sectional profile of the sealing frame (10, 10').

12. Connector assembly of any one of the preceding claims, wherein the sealing member (20) is fully enveloped by the connector housing (30), the sealing frame (10, 10') and the panel (40) when the connector assembly is fully mounted thereto.

13. Connector assembly of any one of the preceding claims, wherein the sealing surfaces (22a, 23a, 23b, 24a) are provided on respective first and second sealing lips (22, 23, 24, 25, 26), wherein preferably the two sealing lips (22, 23, 24, 25, 26) are integral parts of the same sealing member (20).

14. Connector assembly of any one of the preceding claims, wherein the sealing frame (10, 10') with its sealing member (20) is prepared by a two-component molding process, wherein the first component corresponds to the first material and the second component corresponds to the second material.

15. Connector assembly of any one of the preceding claims, wherein the connector housing (30) comprises at least two surfaces (34a, 34b) parallel to the panel (40), wherein a first of the at least two surfaces (34a, 34b) is in contact with the panel (40) and a second of the at least two surfaces (34a, 34b) is in contact with the sealing frame (10, 10') when the connector assembly is fully mounted through the opening (41) of the panel (40),
wherein the surfaces (34a, 34b) preferably press the sealing frame (10, 10') against the panel (40) and compress the sealing portion (20) when the connector assembly is fully mounted through the opening (41) of the panel (40).

## Patentansprüche

1. Verbinderanordnung zur Befestigung durch eine Öffnung (41) in einer Platte (40), insbesondere einer Platte einer Tür oder einer Karosserie eines Fahrzeugs, wobei die Anordnung aufweist:
ein Verbindergehäuse (30) mit integral ausgebildeten Verriegelungsmitteln (33), ausgebildet zum Verriegeln des Gehäuses (30) an den Umfangswänden der Öffnung (41); **dadurch gekennzeichnet, dass** die Anordnung weiter einen offenen Dichtungsrahmen (10, 10') aufweist, der ausgebildet ist zur Befestigung an dem Verbindergehäuse (30) derart, dass sich das Verbindergehäuse (30) durch den offenen Rahmen (10, 10') erstreckt, wobei der Dichtungsrahmen (10, 10') ein Dichtungselement (20) mit zumindest zwei Dichtungsflächen (22a, 23a, 23b, 24a) umfasst, wobei eine Oberfläche in abdichtendem Kontakt mit einer Außenwand des Verbindergehäuses (30) ist und eine andere Oberfläche in abdichtendem Kontakt mit der Platte (40) ist, wenn die Verbinderanordnung daran angebracht ist; und dadurch, dass
der Dichtungsrahmen (10, 10') aus einem ersten Material besteht, wohingegen das Dichtungselement (20) aus zumindest einem zweiten Material besteht, das sich von dem ersten Material unterscheidet.

2. Verbinderanordnung gemäß Anspruch 1, wobei das Dichtungselement (20) aus Gummi und/oder Silizium besteht.

3. Verbinderanordnung gemäß einem der Ansprüche 1 oder 2, wobei das Dichtungselement (20) zumindest einen Dichtungsring aufweist.

4. Verbinderanordnung gemäß einem der vorhergehenden Ansprüche, wobei der Dichtungsrahmen (10, 10') Rastmittel (11, 11') aufweist, die ausgebildet sind zum Einrasten des Dichtungsrahmens (10, 10') an dem Verbindergehäuse (30), insbesondere wobei die Rastmittel (11, 11') Rasthaken oder entsprechende Rastoberflächen sind.

5. Verbinderanordnung gemäß einem der vorhergehenden Ansprüche, wobei der Dichtungsrahmen (10, 10') in Kontakt mit der Platte (40) ist, wenn die Verbinderanordnung durch die Öffnung (41) der Platte (40) angebracht ist.

6. Verbinderanordnung gemäß einem der vorhergehenden Ansprüche, wobei der Dichtungsrahmen (10, 10') ein im Wesentlichen rechteckiger Rahmen mit vier Seitenwänden ist und das Dichtungselement (20) vollständig an Innenseiten der Wände des Rahmens (10, 10') angeordnet ist.

7. Verbinderanordnung gemäß einem der vorhergehenden Ansprüche, wobei sich der Dichtungsrahmen (10, 10') nicht durch oder in die Öffnung (41) der Platte (40) erstreckt, wenn die Verbinderanordnung vollständig daran angebracht ist.

8. Verbinderanordnung gemäß einem der vorhergehenden Ansprüche, die weiter einen sekundären Verriegelungsschieber (50) aufweist, der an dem Verbindergehäuse (30) bewegbar von einer ersten verriegelten Position, in der der Schieber (50) das Verbindergehäuse (30) in seiner befestigten Position verriegelt, in eine zweite offene Position angeordnet ist.

9. Verbinderanordnung gemäß Anspruch 8, wobei der sekundäre Verriegelungsschieber (50) im Wesentlichen eine U-Form hat, die zwei parallele Arme (51, 53) aufweist, die durch einen gemeinsamen Teil (52) verbunden sind, und das Verbindergehäuse (30) zwei entsprechende Führungsnuten (35, 36) aufweist, die ausgebildet sind zum teilweisen Aufnehmen der Arme (51, 53) des sekundären Verriegelungsschiebers (50) derart, dass die Arme (51, 53) teilweise innerhalb der Führungsnuten (35, 36) angeordnet sind und teilweise von den Führungsnuten (35, 36) vorstehen, wenn der sekundäre Verriegelungsschieber (50) in der ersten verriegelten Position ist.

10. Verbinderanordnung gemäß einem der vorhergehenden Ansprüche, wobei der Dichtungsrahmen (10, 10') ein im Wesentlichen rechteckiger Rahmen ist, der aus vier Seitenwänden mit einem T-förmigen Querschnittsprofil besteht, wodurch sich der Steg (12, 12') des T-förmigen Profils nach innen des offenen Dichtungsrahmens (10, 10') erstreckt.

11. Verbinderanordnung gemäß Anspruch 10, wobei das Dichtungselement (20) in Kontakt mit dem Steg (12, 12') und einem Teil des Flansches (13, 13') des T-förmigen Querschnittsprofils des Dichtungsrahmens (10, 10') ist.

12. Verbinderanordnung gemäß einem der vorhergehenden Ansprüche, wobei das Dichtungselement (20) vollständig von dem Verbindergehäuse (30), dem Dichtungsrahmen (10, 10') und der Platte (40) umgeben ist, wenn die Verbinderanordnung vollständig daran angebracht ist.

13. Verbinderanordnung gemäß einem der vorhergehenden Ansprüche, wobei die Dichtungsflächen (22a, 23a, 23b, 24a) an jeweiligen ersten und zweiten Dichtungslippen (22, 23, 24, 25, 26) vorgesehen sind, wobei vorzugsweise die zwei Dichtungslippen (22, 23, 24, 25, 26) integrale Teile desselben Dichtungselements (20) sind.

14. Verbinderanordnung gemäß einem der vorhergehenden Ansprüche, wobei der Dichtungsrahmen (10, 10') mit seinem Dichtungselement (20) durch einen Zweikomponenten-Formprozess hergestellt wird, wobei die erste Komponente dem ersten Material entspricht und die zweite Komponente dem zweiten Material entspricht.

15. Verbinderanordnung gemäß einem der vorhergehenden Ansprüche, wobei das Verbindergehäuse (30) zumindest zwei Oberflächen (34a, 34b) parallel zu der Platte (40) aufweist, wobei eine erste der zumindest zwei Oberflächen (34a, 34b) in Kontakt mit der Platte (40) ist und eine zweite der zumindest zwei Oberflächen (34a, 34b) in Kontakt mit dem Dichtungsrahmen (10, 10') ist, wenn die Verbinderanordnung vollständig durch die Öffnung (41) der Platte (40) angebracht ist, wobei die Oberflächen (34a, 34b) vorzugsweise den Dichtungsrahmen (10, 10') gegen die Platte (40) drücken und den Dichtungsteil (20) zusammendrücken, wenn die Verbinderanordnung vollständig durch die Öffnung (41) der Platte (40) angebracht ist.

## Revendications

1. Assemblage connecteur destiné à être monté à travers une ouverture (41) d'un panneau (40), en particulier dans un panneau d'une porte ou d'un corps d'un véhicule, l'assemblage comprenant :
un boîtier de connecteur (30) avec un moyen de blocage (33) formé de manière intégrale et adapté à bloquer le boîtier (30) sur les parois circonférentielles de l'ouverture (41) ;
**caractérisé en ce que** l'assemblage comprend en outre un cadre d'étanchement ouvert (10, 10') adapté à être monté sur le boîtier de connecteur (30) de telle façon que le boîtier de connecteur (30) s'étend à travers le cadre ouvert (10, 10'), ledit cadre d'étanchement (10, 10') inclut un élément d'étanchement (20) ayant au moins deux surfaces d'étanchement (22a, 23a, 23b, 24a), de sorte qu'une surface est en contact d'étanchement avec une paroi extérieure du boîtier de connecteur (30) et qu'une autre surface est en contact d'étanchement avec le panneau (40) quand l'assemblage connecteur est monté sur celui-ci ;
et **en ce que** le cadre d'étanchement (10, 10') est fait d'un premier matériau, tandis que l'élément d'étanchement (20) est fait d'au moins un second matériau, différent du premier matériau.

2. Assemblage connecteur selon la revendication 1, dans lequel l'élément d'étanchement (20) est fait en caoutchouc et/ou en silicone.

3. Assemblage connecteur selon l'une quelconque des revendications 1 ou 2, dans lequel l'élément d'étanchement (20) comprend au moins une bague d'étanchement.

4. Assemblage connecteur selon l'une quelconque des revendications précédentes, dans lequel le cadre d'étanchement (10, 10') comprend un moyen de verrouillage (11, 11') adapté à verrouiller le cadre d'étanchement (10, 10') sur le boîtier de connecteur (30), en particulier dans lequel le moyen de verrouillage (11, 11') est constitué par des crochets de verrouillage ou par des surfaces de verrouillage correspondantes.

5. Assemblage connecteur selon l'une quelconque des revendications précédentes, dans lequel le cadre d'étanchement (10, 10') est en contact avec le panneau (40) quand l'assemblage connecteur est monté à travers l'ouverture (41) du panneau (40).

6. Assemblage connecteur selon l'une quelconque des revendications précédentes, dans lequel le cadre d'étanchement (10, 10') est un cadre essentiellement rectangulaire ayant quatre parois latérales et l'élément d'étanchement (20) est agencé complètement sur les côtés intérieurs des parois du cadre (10, 10').

7. Assemblage connecteur selon l'une quelconque des revendications précédentes, dans lequel le cadre d'étanchement (10, 10') ne s'étend pas à travers l'ouverture (41) du panneau (40) ni en pénétration dans celle-ci quand l'ensemble connecteur est entièrement monté sur celui-ci.

8. Assemblage connecteur selon l'une quelconque des revendications précédentes, comprenant en outre un coulisseau de blocage secondaire (50) agencé déplaçable sur le boîtier de connecteur (30), depuis une première position bloquée dans laquelle le coulisseau (50) bloque le boîtier de connecteur (30) dans sa position montée, jusqu'à une seconde position ouverte.

9. Assemblage connecteur selon la revendication 8, dans lequel ledit coulisseau de blocage secondaire (50) a essentiellement une forme en U comprenant deux bras parallèles (51, 53) qui sont connectés par une portion commune (52), et le boîtier de connecteur (30) comprend deux gorges de guidage correspondantes (35, 36) adaptées à recevoir partiellement les bras (51, 53) du coulisseau de blocage secondaire (50) de telle façon que les bras (51, 53) sont partiellement agencés à l'intérieur des gorges de guidage (35, 36) et se projettent partiellement depuis les gorges de guidage (35, 36) quand le coulisseau de blocage secondaire (50) est dans la première position bloquée.

10. Assemblage connecteur selon l'une quelconque des revendications précédentes, dans lequel le cadre d'étanchement (10, 10') est un cadre essentiellement rectangulaire constitué de quatre parois latérales avec un profil de section transversale en forme de T, de sorte que la jambe (12, 12') du profil en forme de T s'étend vers l'intérieur du cadre d'étanchement ouvert (10, 10').

11. Assemblage connecteur selon la revendication 10, dans lequel l'élément d'étanchement (20) est en contact avec la jambe (12, 12') et une partie de la tête (13, 13') du profil de section transversale en forme de T du cadre d'étanchement (10, 10').

12. Assemblage connecteur selon l'une quelconque des revendications précédentes, dans lequel l'élément d'étanchement (20) est entièrement enveloppé par le boîtier de connecteur (30), le cadre d'étanchement (10, 10') et le panneau (40) quand l'assemblage connecteur est entièrement monté sur celui-ci.

13. Assemblage connecteur selon l'une quelconque des revendications précédentes, dans lequel les surfaces d'étanchement (22a, 23a, 23b, 24a) sont prévues sur une première et une seconde lèvre d'étanchement (22, 23, 24, 25, 26) respective, et dans lequel de préférence les deux lèvres d'étanchement (22, 23, 24, 25, 26) sont des parties intégrantes du même élément d'étanchement (20).

14. Assemblage connecteur selon l'une quelconque des revendications précédentes, dans lequel le cadre d'étanchement (10, 10') avec son élément d'étanchement (20) est préparé par un processus de moulage à deux composants, dans lequel le premier composant correspond au premier matériau et le second composant correspond au second matériau.

15. Assemblage connecteur selon l'une quelconque des revendications précédentes, dans lequel le boîtier de connecteur (30) comprend au moins deux surfaces (34a, 34b) parallèles au panneau (40), dans lesquelles une premières desdites au moins deux surfaces (34a, 34b) est en contact avec le panneau (40) et une seconde desdites au moins deux surfaces (34a, 34b) est en contact avec le cadre d'étanchement (10, 10') quand l'assemblage connecteur est entièrement monté à travers l'ouverture (41) du panneau (40),
dans lequel les surfaces (34a, 34b) pressent de préférence le cadre d'étanchement (10, 10') contre le panneau (40) et compriment la portion d'étanchement (20) quand l'assemblage connecteur est entièrement monté à travers l'ouverture (41) du panneau (40).
